# EUROPEAN PATENT SPECIFICATION

(11) **EP 4 525 467 B1**
(45) Date of publication and mention of the grant of the patent: **12.08.2026**
(21) Application number: 22944971.5
(22) Date of filing: 30.05.2022
(51) Int. Cl.: H04N 21/436, H04N 21/43, H04N 21/236, H04N 21/222, H04N 21/858, H04L 47/34, H04L 43/0829, H04L 67/02, H04L 67/1095, H04L 69/40, H04N 21/4363, H04N 21/647, H04N 21/845

(54) **MIRACAST PROVISION METHOD AND MIRACAST PROVISION SYSTEM**
MIRACAST-BEREITSTELLUNGSVERFAHREN UND MIRACAST-BEREITSTELLUNGSSYSTEM
PROCÉDÉ DE FOURNITURE DE MIRACAST ET SYSTÈME DE FOURNITURE DE MIRACAST

(43) Date of publication of application: 19.03.2025
(73) Proprietor: LG Electronics Inc., Yeongdeungpo-gu Seoul 07336 (KR)
(72) Inventor: PARK, Jungkyu, Seoul 06772 (KR)
(74) Representative: Schornack, Oliver
(86) International application number: PCT/KR2022/007678
(87) International publication number: WO 2023/234432

(56) References cited:
- WO-A1-2022/089271
- JP-A- 2016 021 659
- KR-A- 20150 105 334
- KR-A- 20170 061 108
- KR-A- 20180 023 724
- KR-A- 20200 112 405
- US-A1- 2018 268 869

## Description

### TECHNICAL FIELD

The present disclosure relates to an apparatus and method for providing a miracast service in various electronic devices.

### BACKGROUND ART

With the recent development of digital technology, various types of electronic devices such as mobile communication terminals, smartphones, tablet Personal Computers (PCs), electronic notebooks, laptops, Personal Digital Assistants (PDAs), wearable devices, etc. are widely used.

Electronic devices are implemented in the form of multimedia players with complex functions. For example, electronic devices may provide call functions such as voice calls and video calls, message transmission and reception functions such as SMS(Short Message Service)/MMS(Multimedia Message Service), e-mail, and the like, wireless (e.g., Bluetooth, Wi-Fi, wireless fidelity, etc.) communication function, wired (e.g., HDMI, high definition multimedia interface) communication function, shooting function, broadcast playback function, video playback function, music playback function, Internet function, messenger function, game function, Social Networking Service (SNS) function, and the like.

Recently, the use of services (or functions) using technologies (e.g., miracast) that wirelessly connect (connect) electronic devices and external electronic devices (e.g., televisions, monitors, etc.) is increasing. For example, a user may display and share a screen displayed on an electronic device through a display of an external electronic device (e.g., television, monitor, etc.) connected wirelessly to the electronic device. These services (or functions) are provided under names such as miracast, screen mirroring, airplay, or wireless display (WiDi) depending on the manufacturer of electronic devices.

Miracast is a technology (a type of mirroring) that wirelessly connects display devices and utilizes Wi-Fi to be mainly used in smartphones, laptops, tablet PCs, and the like. Miracast may transmit not only video but also sound. However, since it is wireless, there occurs an effect that video or sound is cut off or pushed. Document US 2018/268869 A1 discloses a wireless mirroring between devices. Cloud usage occurs when the source device provides cloud content information, after which the sink device directly retrieves and reproduces the content from a cloud server instead of receiving the media stream from the source device.

### DISCLOSURE

### TECHNICAL TASKS

One technical task of the present disclosure is to provide a miracast providing apparatus and method for improving the stability of a wireless connection in order to solve the above problem.

### TECHNICAL SOLUTIONS

The invention is defined by the appended claims.

In one technical aspect of the present disclosure, provided is a method of providing miracast, the method including generating a URL accessible to an instant cloud server, transmitting, by a transmitting device, a first packet constituting image data to the instant cloud server through the URL, transmitting, by the transmitting device, a second packet constituting the image data to a receiving device through miracast, checking, by the receiving device, whether the second packet is a damaged packet, based on the second packet being a damaged packet, making, by the receiving device, a request for a packet corresponding to the damaged second packet to the instant cloud server, receiving, by the receiving device, a packet corresponding to the damaged packet through the instant cloud server, outputting, by the receiving device, the image data, and deleting the URL based on terminating the connection between the transmitting device and the receiving device.

The method may further include recording, by the transmitting device, numbering information in a packet transmitted to the instant cloud server and a packet transmitted to the receiving device.

The receiving device may receive the packet corresponding to the damaged packet through the instant cloud server based on the numbering information.

The method may further include, based on a packet received for a first time or more being the damaged packet, receiving, by the receiving device, the packet corresponding to the damaged packet for a second time through the instant cloud server.

The instant cloud server may include at least one of a network storage or a local storage.

The second packet may include a plurality of frames constituting the image data.

The method may further include receiving a transmission scheme switching input from a user and receiving, by the receiving device, a packet through the instant cloud server based on the transmission scheme switching input.

The method may further include deleting, by the instant cloud server, the first packet received from the transmitting device based on terminating the connection between the transmitting device and the receiving device.

In another technical aspect of the present disclosure, provided is a miracast providing system, including an instant cloud server generating an accessible URL, a receiving device receiving and outputting image data, and a transmitting device configured to transmit a first packet constituting image data to the instant cloud server through the URL and transmit a second packet constituting the image data to the receiving device through miracast, wherein based on the second packet being a damaged packet, the receiving device may make a request for a packet corresponding to the damaged second packet to the instant cloud server and receive a packet corresponding to the damaged packet through the instant cloud server.

The transmitting device may record numbering information in a packet transmitted to the instant cloud server and a packet transmitted to the receiving device.

The receiving device may receive the packet corresponding to the damaged packet through the instant cloud server based on the numbering information.

Based on a packet received for a first time or more being the damaged packet, the receiving device may receive the packet corresponding to the damaged packet for a second time through the instant cloud server.

The instant cloud server may include at least one of a network storage or a local storage.

The second packet may include a plurality of frames constituting the image data.

The receiving device may be configured to receive a transmission scheme switching input from a user and receive a packet through the instant cloud server based on the transmission scheme switching input.

The instant cloud server may delete the URL and the first packet received from the transmitting device based on terminating the connection between the transmitting device and the receiving device.

In further technical aspect of the present disclosure, provided is a miracast providing method, including dividing, by a transmitting device, image data in frame unit, accumulating and packetizing, by the transmitting device, a first frame, a second frame, and a third frame into a first packet, accumulating and packetizing, by the transmitting device, the second frame, the third frame, and a fourth frame into a second packet, accumulating and packetizing, by the transmitting device, the third frame, the fourth frame, and a fifth frame into a third packet, and transmitting, by the transmitting device, sequentially transmitting the first packet, the second packet, and the third packet to a receiving device.

Based on at least one of the first to third packets being damaged during a transmission process, the receiving device may output data using a frame included in the rest of the packets except for the damaged packet.

The first frame may be a frame ahead of the second frame by a first time, the second frame may be a frame ahead of the third frame by the first time, the third frame may be a frame ahead of the fourth frame by the first time, and the fourth frame may be a frame ahead of the fifth frame by the first time.

The first time may include 0.1 second or 0.2 second.

### ADVANTAGEOUS EFFECTS

According to an embodiment of the present disclosure, a loss occurring during transmission may be recovered by applying a compensation algorithm for signal loss. Accordingly, seamless video viewing may be provided to a user even when the connection is unstable due to positional movement.

Effects that may be obtained from the present disclosure are not limited to the effects mentioned above, and other effects not mentioned are able to be clearly understood by those skilled in the art in the technical field to which the present disclosure belongs from a description below.

### DESCRIPTION OF DRAWINGS

FIG. 1 is a block diagram illustrating constituent elements of a display device according to an embodiment of the present disclosure.
FIG. 2 is a diagram illustrating a system according to an embodiment of the present disclosure.
FIG. 3 is a diagram illustrating an example of providing a service using a miracast between electronic devices according to embodiments of the present disclosure.
FIG. 4 is a diagram illustrating a miracast providing method of accumulating and transmitting data according to an embodiment of the present disclosure.
FIG. 5 is a flowchart illustrating a Miracast providing method of accumulating and transmitting data according to an embodiment of the present disclosure.
FIG. 6 is a diagram illustrating a miracast providing method of generating an instant cloud according to an embodiment of the present disclosure.
FIG. 7 is a flowchart illustrating a miracast providing method for generating an instant cloud according to an embodiment of the present disclosure.

### BEST MODE

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well known to one of ordinary skill in the relevant art has generally been omitted for the sake of brevity. The accompanying drawings are used to help easily understand various technical features and it should be understood that the embodiments presented herein are not limited by the accompanying drawings

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

On the other hand, the image display device described herein is, for example, an intelligent image display device implemented by adding a computer support function to a broadcast reception function, and further includes an Internet function or the like while sufficiently performing the broadcast reception function, so that the image display device may have user-friendly interfaces such as a handwriting input device, a touchscreen, or a spatial remote controller. Further, the image display device can support a wired or wireless Internet function by connecting to the Internet and a computer device, thereby performing e-mailing, web browsing, banking, or gaming. To implement these functions, the image display device may operate based on a standard general-purpose Operating System (OS).

Accordingly, the image display device according to the present disclosure is designed in a manner that various applications can be easily added to or deleted from a general-purpose OS kernel so that the image display device can perform various user-friendly functions. The image display device may be, for example, a network TV, a Hybrid broadcast broadband TV (HBBTV), a smart TV, etc. The image display device is applicable to a smartphone as needed.

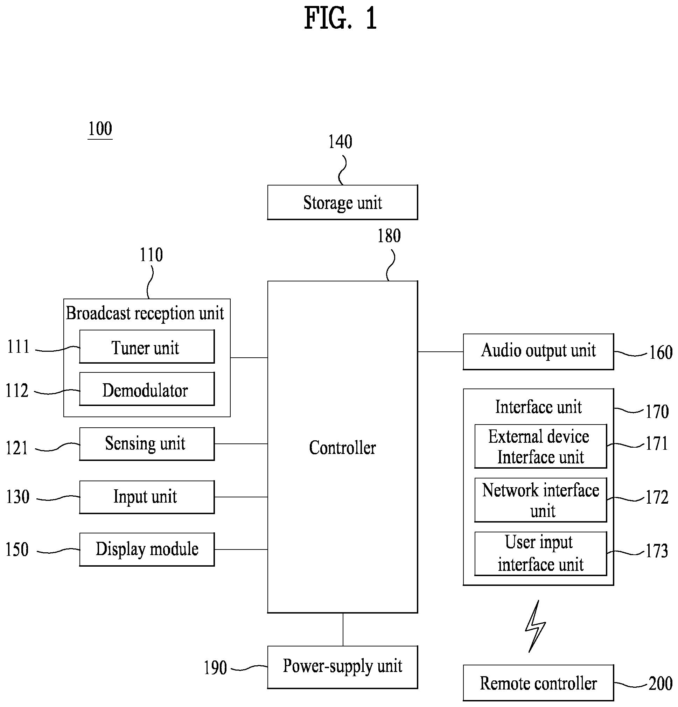

FIG. 1 is a block diagram illustrating constituent elements of a display device 100 according to an embodiment of the present disclosure.

Referring to FIG. 1, the display device 100 may include a broadcast reception unit 110, an external device interface unit 171, a network interface unit 172, a storage unit 140, a user input interface unit 173, an input unit 130, a controller 180, a display 150, an audio output unit 160, and/or a power-supply unit 190.

The broadcast reception unit 110 may include a tuner unit 111 and a demodulator 112.

Although not shown in the drawings, the display device 100 may include only the external device interface unit 171 and the network interface unit 172 from among the broadcast reception unit 110, the external device interface unit 171, and the network interface unit 172. That is, the display device 100 may not include the broadcast reception unit 110.

The tuner unit 111 may select a broadcast signal corresponding to either a user-selected channel or all prestored channels from among broadcast signals received through an antenna (not shown) or a cable (not shown). The tuner unit 111 may convert the selected broadcast signal into an intermediate frequency (IF) signal or a baseband image or a voice signal.

For example, when the selected broadcast signal is a digital broadcast signal, the tuner unit 111 may convert the selected broadcast signal into a digital IF (DIF) signal. When the selected broadcast signal is an analog broadcast signal, the tuner unit 111 may convert the selected broadcast signal into an analog baseband image or a voice signal (CVBS/SIF). That is, the tuner unit 111 may process the digital broadcast signal or the analog broadcast signal. The analog baseband image or the voice signal (CVBS/SIF) output from the tuner unit 111 may be directly input to the controller 180.

The tuner unit 111 may sequentially select broadcasting signals of all broadcasting channels stored through a channel memory function from among the received broadcast signals, and may convert the selected broadcast signal into an intermediate frequency (IF) signal or a baseband image or a voice signal.

The tuner unit 111 may include a plurality of tuners to receive broadcast signals of the plurality of channels. Alternatively, a single tuner for simultaneously receiving broadcast signals of the plurality of channels is also possible.

The demodulator 112 may receive the digital IF signal (DIF) converted by the tuner unit 111, and may thus perform demodulation of the received signal. The demodulator 112 may perform demodulation and channel decoding, and may output a stream signal (TS). The stream signal may be a signal formed by multiplexing an image signal, a voice signal, or a data signal.

The stream signal (TS) output from the demodulator 112 may be input to the controller 180. The controller 180 may perform demultiplexing, image/audio signal processing, etc., may output an image through the display 150, and may output a voice through the audio output unit 160.

The sensing unit 120 may sense a change in the display device 100 or may sense an external change. For example, the sensing unit 120 may include a proximity sensor, an illumination sensor, a touch sensor, an infrared (IR) sensor, an ultrasonic sensor, an optical sensor (e.g., a camera), a voice sensor (e.g., a microphone), a battery gauge, environmental sensors (e.g., hygrometer, a thermometer, etc.).

The controller 180 may check a state of the display device 100 based on information collected by the sensing unit 120, may notify the user of a problem, or may control the display device 100 to be kept in the best state.

In addition, it is possible to provide an optimal viewing environment by differently controlling the content, image quality, size, etc. of the image provided to the display module 180 depending on the viewer, ambient illuminance, etc. sensed by the sensing unit. As the smart TV has evolved, the number of functions mounted in the display device increases, and the number of the sensing units 20 also increases together with the increasing functions.

The input unit 130 may be provided at one side of a main body of the display device 100. For example, the input unit 130 may include a touch pad, a physical button, and the like. The input unit 130 may receive various user commands related to the operation of the display device 100, and may transmit a control signal corresponding to the input command to the controller 180.

Recently, as a bezel of the display device 100 decreases in size, the number of display devices 100 each including a minimum number of input unit 130 formed in a physical button exposed to the outside is rapidly increasing. Instead, a minimum number of physical buttons may be provided on the back or side surface of the display device 100. The display device may receive a user input through the remote controller 200 through a touchpad or a user input interface unit 173 to be described later.

The storage unit 140 may store a program for processing and controlling each signal used in the controller 180, and may store a signal-processed image, a voice, or a data signal. For example, the storage unit 140 may store application programs designed for the purpose of performing various tasks that can be processed by the controller 180, and may selectively provide some of the stored application programs upon request of the controller 180.

The program stored in the storage unit 140 is not specifically limited to being executed by the controller 180. The storage unit 140 may perform a function for temporarily storing an image, a voice, or a data signal received from an external device through the external device interface unit 171. The storage unit 140 may store information about a predetermined broadcast channel through a channel memory function such as a channel map.

Although the storage unit 140 of FIG. 1 is provided separately from the controller 180, the scope of the present disclosure is not limited thereto, and the storage unit 140 may also be included in the controller 180 as needed.

The storage unit 140 may include at least one of a volatile memory (e.g., DRAM, SRAM, SDRAM, etc.) and a non-volatile memory (e.g., flash memory, hard disk drive (HDD), solid state drive (SSD), etc.).

The display 150 may generate a drive signal by converting an image signal, a data signal, an OSD signal, a control signal processed by the controller 180, or by converting an image signal, a data signal, a control signal, etc. received from the interface unit 171. The display 150 may include a display panel 181 having a plurality of pixels.

A plurality of pixels included in the display panel may include RGB sub-pixels. Alternatively, a plurality of pixels included in the display panel may include sub-pixels of RGBW. The display 150 may convert the image signal, the data signal, the OSD signal, the control signal, etc. processed by the controller 180 to generate a drive signal for the plurality of pixels.

The display 150 may be implemented as a plasma display panel (PDP), a liquid crystal display (LCD), an organic light emitting diode (OLED), a flexible display, etc. In addition, the display 150 may also be implemented as a three-dimensional (3D) display. The three-dimensional (3D) display 150 may be classified into a glassless-type 3D display and a glasses-type 3D display.

The display device may include a display module that occupies most parts of the front surface, and a case that covers the back and side surfaces of the display module and packages the display module.

Recently, the display device 100 has evolved from a flat-screen display to a curved-screen display. In order to implement the curved screen, the display device 100 may use a display module 150 that can be bent or curved, such as a light emitting diode (LED) or an organic light emitting diode (OLED), etc.

Conventionally, the LCD has difficulty in self-emitting light, so that the conventional LCD has been designed to receive light through a backlight unit. The backlight unit is a device for uniformly supplying light received from a light source to a liquid crystal located on the front surface of the display device. As the backlight becomes thinner, a thin LCD can be implemented. However, it is actually difficult for the backlight unit to be implemented as a curved structure formed of a flexible material. Although the backlight unit is implemented as a curved shape, it is difficult for light to be uniformly applied to the liquid crystal, thereby changing brightness of the screen.

On the other hand, the LED or the OLED is designed in a manner that each of constituent elements constructing the pixels can self-emit light without using the backlight unit, so that the LED or the OLED can be implemented as a curved shape without any problems. In addition, since each element can perform self-emission of light, brightness of each element is not affected by a change in the positional relationship between the element and adjacent elements, so that a curved display module 150 can be implemented as an LED or OLED.

OLED (Organic Light Emitting Diode) panels appeared in earnest in mid-2010 and are rapidly replacing LCDs in the small- and medium-sized display market. The OLED is a display made using the self-emission characteristics in which OLED emits light when a current flows in a fluorescent organic compound. Since the response speed of the OLED is faster than that of the LCD, there is little afterimage when moving images are implemented.

OLEDs may be used as a light-emitting display product. In this case, the light-emitting display device may use three fluorescent organic compounds (such as red, green, and blue) each having a self-emitting function, and may use the self-emitting phenomenon in which positive(+)-charged particles and electrons injected from a cathode and anode are combined with each other within the organic material, so that a backlight unit causing degradation of color sense need not be used.

The LED panel is implemented by technology for using only one LED element as one pixel, and has a smaller LED element compared to the prior art, so that a curved display module 150 can be implemented. Whereas the conventional device referred to as an LED TV can use the LED as a light source of the backlight unit for supplying light to the LCD, it is impossible for the LED of the conventional device to constitute a screen.

The display module may include a display panel, a coupling magnet located on the rear surface of the display panel, a first power-supply unit, and a first signal module. The display panel may include a plurality of pixels (R, G, B). The plurality of pixels (R, G, B) may be formed in each region where a plurality of data lines and a plurality of gate lines cross each other. The plurality of pixels (R, G, B) may be arranged in a matrix.

For example, the plurality of pixels (R, G, B) may include a red(R) sub-pixel, a green(G) sub-pixel, and a blue(B) sub-pixel. The plurality of pixels (R, G, B) may further include white (W) sub-pixel(s).

In the display module 150, one side where an image is displayed may be referred to as a front side or a front surface. When the display module 150 displays an image, one side where no image is observed may be referred to as a rear side or a rear surface.

Meanwhile, the display 150 may be implemented as a touchscreen, so that the display 150 can also be used as an input device in addition to an output device.

The audio output unit 160 may receive a voice-processed signal from the controller 180, and may output the received signal as a voice signal.

The interface unit 170 may serve as a path of connection to various kinds of external devices connected to the display device 100. The interface unit may include not only a wired method for transmitting/receiving data through a cable, but also a wireless method using the antenna.

The interface unit 170 may include at least one of a wired/wireless headset port, an external charger port, a wired/wireless data port, a memory card port, a port connected to a device having an identification module, an audio input/output (I/O) port, a video I/O port, and an earphone port.

As an example of a wireless method, the above-described broadcast reception unit 110 may be used. The broadcast reception unit 110 may be configured to use a broadcast signal, a mobile communication short-range communication signal, a wireless Internet signal, and the like.

The external device interface unit 171 may transmit or receive data to and from a connected external device. To this end, the external device interface unit 171 may include an A/V input/output (I/O) unit (not shown).

The external device interface unit 171 may be wired or wirelessly connected to an external device such as a digital versatile disc (DVD) player, a Blu-ray player, a game console, a camera, a camcorder, a computer (laptop), a set-top box, or the like, and may perform an input/output (I/O) operation with the external device.

In addition, the external device interface unit 171 may establish a communication network with various remote controllers 200, may receive a control signal related to operation of the display device 100 from the remote controller 200, or may transmit data related to operation of the display device 100 to the remote controller 200.

The external device interface unit 171 may include a wireless communication unit (not shown) for short-range wireless communication with other electronic devices. Through the wireless communication unit (not shown), the external device interface unit 171 may exchange data with an adjacent mobile terminal. In particular, the external device interface unit 171 may receive device information, application information, an application image, and the like from the mobile terminal in a mirroring mode.

The network interface unit 172 may provide an interface for connecting the display device 100 to a wired/wireless network including the Internet network. For example, the network interface unit 172 may receive content or data provided by the Internet, a content provider, or a network administrator through a network. The network interface unit 172 may include a communication module (not shown) for connection with the wired/wireless network.

The external device interface unit 171 and/or the network interface unit 172 may include a communication module for short-range communication such as Wi-Fi, Bluetooth, Bluetooth low energy (BLE), ZigBee, Near Field Communication (NFC), and a communication module for cellular communication such as Long-Term Evolution (LTE), LTE-A (LTE Advanced), Code Division Multiple Access (CDMA), WCDMA(wideband CDMA), UMTS(universal mobile telecommunications system), WiBro(Wireless Broadband), etc.

The user input interface unit 173 may transmit user input signals to the controller 180, or may transmit signals received from the controller 180 to the user. For example, the user input interface unit 173 may transmit or receive user input signals (such as a power-on/off signal, a channel selection signal, and a screen setting signal) to and from the remote controller 200, may transmit user input signals received through a local key (not shown) such as a power key, a channel key, a volume key, and a setting key to the controller 180, may transmit a user input signal received by a sensor unit (not shown) for sensing a user gesture to the controller 180, or may transmit a signal received from the controller 180 to the sensor unit.

The controller 180 may include at least one processor, and may control the overall operation of the display device 100 using the processor included therein. Here, the processor may be a general processor such as a CPU. Of course, the processor may be a dedicated device such as an ASIC, or other hardware-based processor.

The controller 180 may demultiplex the stream received through the tuner unit 111, the demodulator 112, the external device interface unit 171, or the network interface 172, and may process the demultiplexed signals to generate and output a signal for image or voice output.

The image signal processed by the controller 180 may be input to the display 150 and displayed as an image corresponding to the corresponding image signal. In addition, the image signal processed by the controller 180 may be input to the external output device through the external device interface unit 171.

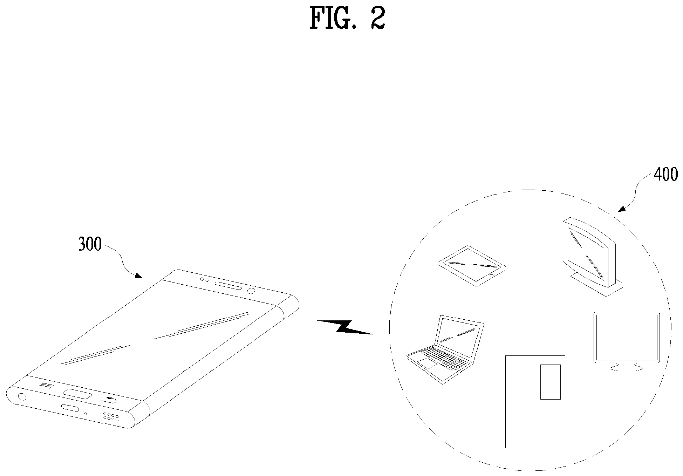

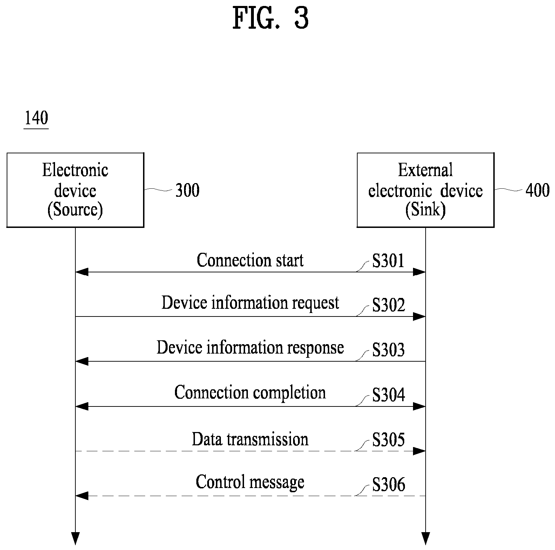

The voice (or audio) signal processed by the controller 180 may be audibly output to the audio output unit 160. In addition, the voice signal processed by the controller 180 may be input to the external output device through the external device interface unit 171. Although not shown in FIG. 2, the controller 180 may include a demultiplexer, an image processor, and the like, and a detailed description thereof will hereinafter be described with reference to FIG. 3.

In addition, the controller 180 may control the overall operation of the display device 100. For example, the controller 180 may control the tuner unit 111 to select a broadcast program corresponding to either a user-selected channel or a prestored channel.

In addition, the controller 180 may control the display device 100 by a user command or an internal program received through the user input interface unit 173. The controller 180 may control the display 150 to display an image. In this case, the image displayed on the display 150 may be a still image or a moving image, and may be a 2D image or a 3D image.

On the other hand, the controller 180 may display a predetermined 2D object in the image displayed on the display 150. For example, the object may be at least one of a connected web screen (newspaper, magazine, etc.), electronic program guide (EPG), various menus, widgets, icons, still images, moving images, and text.

Meanwhile, the controller 180 may modulate and/or demodulate the signal using an amplitude shift keying (ASK) scheme. Here, the ASK scheme may refer to a method for modulating a signal by differentiating the amplitude of a carrier wave according to data values or for restoring an analog signal to a digital data value according to the amplitude of the carrier wave.

For example, the controller 180 may modulate an image signal using the ASK scheme, and may transmit the modulated signal through a wireless communication module.

For example, the controller 180 may demodulate and process the image signal received through the wireless communication module using the ASK scheme.

Accordingly, the display device 100 may simply transmit and receive signals to and from other image display devices arranged adjacent to each other without using either a unique identifier such as a Media Access Control (MAC) address or a complex communication protocol such as TCP/IP.

On the other hand, the display device 100 may further include a photographing unit (not shown). The photographing unit may photograph a user. The photographing unit may be implemented as one camera, but is not limited thereto, and may be implemented by a plurality of cameras. On the other hand, the photographing unit may be embedded in the display device 100 or may be separately arranged on the display 150. The image information photographed by the photographing unit may be input to the controller 180.

The controller 180 may recognize the position of the user based on the image photographed by the photographing unit. For example, the controller 180 may recognize a distance (z-axis coordinates) between the user and the display device 100. In addition, the controller 180 may recognize the X-axis coordinate and the Y-axis coordinate within the display 150 corresponding to the user position.

The controller 180 may sense a user gesture based on an image photographed by the photographing unit, each of signals detected by the sensor unit, or a combination thereof.

The power-supply unit 190 may supply corresponding power to the display device 100. In particular, the controller 180 may be implemented as a System on Chip (SoC), a display 150 for displaying an image, and an audio output unit 160 for audio output.

Specifically, the power-supply unit 190 may include a converter (not shown) for converting AC power into DC power, and a DC/DC converter (not shown) for converting the level of DC power.

On the other hand, the power-supply unit 190 may receive power from the external power source, and may distribute the received power to the respective components. The power-supply unit 190 may be directly connected to the external power source to supply AC power, and may include a battery capable of being charged with electricity.

In the former case, the power-supply unit 190 may be used by connecting to a wired cable, and it is difficult for the power-supply unit 190 to move from one place to another place, and the movement range of the power-supply unit 190 is limited. In the latter case, the power-supply unit 190 can move from one place to another place, but the weight and volume of the power-supply unit 190 may increase as much as the weight and volume of the battery. In addition, for charging, the power-supply unit 190 should be directly connected to a power cable for a predetermined period of time or should be coupled to a charging cradle (not shown) for power supply.

The charging cradle may be connected to the display device through a terminal exposed to the outside. Alternatively, if the power-supply unit 190 approaches the charging cradle using a wireless interface, a built-in battery of the power-supply unit 190 may also be charged with electricity.

The remote controller 200 may transmit a user input to the user input interface unit 173. To this end, the remote controller 200 may use Bluetooth, Radio Frequency (RF) communication, infrared (IR) communication, Ultra-Wideband (UWB), ZigBee, or the like. In addition, the remote controller 200 may receive the image, voice, or data signal output from the user input interface unit 173, and may display or audibly output the received image, voice, or data signal.

On the other hand, the above-described display device 100 may be a fixed or mobile digital broadcast receiver capable of receiving digital broadcast signals.

Meanwhile, the block diagram of the display device 100 shown in FIG. 1 is disclosed for only for illustrative purposes for one embodiment of the present disclosure, and the respective components of the display device 100 shown in FIG. 1 can be integrated, added or omitted according to the specifications of the digital device 100 which is actually implemented.

That is, if necessary, two or more components may be combined into one component, or one component may be subdivided into two or more components. In addition, the functions performed in each block are intended to explain the embodiment of the present disclosure, and the specific operation or device does not limit the scope of the present disclosure.

Through an embodiment of the present disclosure, it is intended to improve limitations such as screen noise, image quality limitation, connection instability, and the like by securing connection stability of miracast, which is representative of wireless image transmission/reception technology of display devices.

Particularly, according to an embodiment of the present disclosure, a loss occurring during transmission may be recovered by applying a compensation algorithm for signal loss. Accordingly, it is possible to provide a user with seamless video viewing even when the connection is unstable due to the occurrence of positional movement.

FIG. 2 is a diagram illustrating a system according to an embodiment of the present disclosure.

Referring to FIG. 2, a system according to various embodiments of the present disclosure may include an electronic device 300 (e.g., a first electronic device or a source device) and at least one external electronic device 400 (e.g., a second electronic device or a sink device). In this case, both the electronic device 300 and the external electronic device 400 of FIG. 2 may be a type of the display device of FIG. 1.

In an embodiment, the electronic device 300 may be connected to the external electronic device 400. In an embodiment, the electronic device 300 may be connected to the external electronic device 400 based on wireless communication (e.g., Bluetooth, low power Bluetooth (BLE), Wi-Fi, etc.).

In an embodiment, the electronic device 300 may connect wireless communication with the external electronic device 400 and transmit a device information request to the external electronic device 400. In response to the device information request to the external electronic device 400, the electronic device 300 may obtain device information (e.g., operation mode (e.g., horizontal mode, vertical mode) information, resolution information, display type (e.g., vertical type, horizontal type) information, etc.), which is related to the connection to the external electronic device 400, from the external electronic device 400. The electronic device 300 may transmit a screen or content corresponding to the external electronic device based on the obtained device information and display the screen or content on a display of the external electronic device 400. In an embodiment, various examples related to the electronic device 300 performing a communication connection in conjunction with the external electronic device 400 so as to perform (provide) a miracast accordingly will be described in detail with reference to the drawings described below.

In an embodiment, the external electronic device 400 may be connected to the electronic device 300 through wireless communication, and may include various devices including a display. In an embodiment, the external electronic device 400 may include various output devices that are wirelessly connected to the electronic device 300 to receive and output (display) data (e.g., screen, content, etc.) displayed on the electronic device 300 through a provided display. For example, the external electronic device 400 may include various devices that may be wirelessly connected to the electronic device 300, such as a monitor, a tablet PC, a laptop PC (or a notebook), a television, a refrigerator, etc., and include a display. According to various embodiments, the external electronic device 400 may have a configuration similar to that of the electronic device 300 described above. For example, the external electronic device 400 includes a control circuit (or processor) corresponding to the controller 180 of FIG. 1, and may be implemented to have more components than or less than the components of the display device 100 shown in FIG. 1. In describing various embodiments below, an example in which the external electronic device 400 is a display device will be described.

In an embodiment, the external electronic device 400 may have a display installed in a prescribed area thereof, and may include a communication circuit (e.g., a communication module) capable of connecting wireless communication with the electronic device 300. In an embodiment, the external electronic device 400 may receive data transmitted by the electronic device 300 using the communication module and display the received data using the display.

In an embodiment, the external electronic device 400 may connect wireless communication in response to a connection request from the electronic device 300. Once the wireless communication is connected, the external electronic device 400 may provide device information to the electronic device 300 in response to a request for device information from the electronic device 300.

In an embodiment, various examples related to the external electronic device 400 performing a communication connection in conjunction with the electronic device 300 and operating based on the received data will be described in detail with reference to the drawings described below.

According to various embodiments, the electronic device 300 and the external electronic device 400 may be directly connected through wireless communication. According to various embodiments, the electronic device 300 and the external electronic device 400 may be connected through an Access Point (AP) accessed in common.

According to various embodiments, the electronic device 300 and the external electronic device 400 may exchange messages through a User Input Back Channel (UIBC). According to various embodiments, the electronic device 300 may obtain device information related to the external electronic device 400 through a negotiation procedure when performing a miracast connection with the external electronic device 400. According to various embodiments, the electronic device 300 may check a resolution, a display type, and the like related to the external electronic device 400 based on the device information. According to various embodiments, the electronic device 300 may perform miracast in response to a user request while performing at least one function (or application), and may generate shared data corresponding to a direction of the display on the resolution of the external electronic device 400 based on the obtained device information and transmit the same to the external electronic device 400.

As described above, an electronic device according to various embodiments includes a wireless communication unit for miracast connection and data transmission/reception, a display for displaying data, and a processor functionally connected to the wireless communication unit and the display. The processor may be configured to obtain device information from an external electronic device connected by miracast, determine a resolution and display type of the external electronic device based on the device information, generate data corresponding to a vertical display based on the resolution if the external electronic device is the vertical display, and transmit the data to the external electronic device using the wireless communication unit.

According to various embodiments, the device information may be configured to include a resolution and a display type supported by the external electronic device. According to various embodiments, the device information may be configured to include information on an operation mode of the external electronic device, information on a type of the external electronic device, manufacturer information, model name information, or information of a User Input Back Channel (UIBC).

According to various embodiments, the processor may be configured to determine whether the external electronic device is a vertical display or whether the external electronic device is operating in a vertical direction, based on the display type.

According to various embodiments, the processor may determine an optimal resolution common to the external electronic device based on the device information, determine a display type of the external electronic device, generate a vertical virtual display with the determined resolution based on the display type being a vertical display, and generate data corresponding to the resolution and display type of the external electronic device using the virtual display.

According to various embodiments, the processor may be configured to rotate a default horizontal virtual display in a vertical direction to correspond to the vertical display of the external electronic device and generate data using the rotated vertical virtual display.

According to various embodiments, the processor may be configured to generate a horizontal virtual display having the determined resolution when the display type is a horizontal display.

According to various embodiments, the processor may receive coordinates according to a user input through a User Input Back Channel (UIBC) from the external electronic device, determine a type of the external electronic device in response to the coordinate reception, recognize the coordinates without transformation of the coordinates based on the external electronic device being a first type device based on a vertical display, and perform the transformation of the coordinates to recognize the transformed coordinates based on the external electronic device being a second type device used by rotating in a vertical direction from a default horizontal direction.

According to various embodiments, the processor may be configured to perform coordinate transformation by transforming an x-coordinate and a y-coordinate into the y-coordinate and the x-coordinate, respectively.

According to various embodiments, the external electronic device may be configured to detect a user input in a state of being miracast-connected with the electronic device, determine a direction of a display in response to the user input detection, transform coordinates for the user input based on the direction of the display being in a state of being used by rotating from a default horizontal direction to a vertical direction, and transmit the transformed coordinates to the electronic device.

FIG. 3 is a diagram illustrating an example of providing a service using miracast between electronic devices according to embodiments of the present disclosure.

Referring to FIG. 3, in step S301, an electronic device 300 (e.g., a source device) and an external electronic device 400 (e.g., a sink device) may start a connection procedure. For example, the source device 300 and the sink device 400 may perform a negotiation procedure for a miracast connection.

In step S302, the source device 300 may transmit a request message for requesting device information related to the sink device 400 in the negotiation procedure. For example, the source device 300 may request resolution information supported by the sink device 400 and information on a type of display (e.g., a vertical display, a horizontal display). According to various embodiments, the source device 300 may also request information on an operation mode (e.g., horizontal mode, vertical mode) in which the sink device 400 is operating.

In step S303, the sink device 400 may transmit a response message including the device information related to the sink device 400 in response to the device information request of the source device 300 in the negotiation procedure. According to various embodiments, the device information provided by the sink device 400 may include the resolution information supported by the sink device 400 and the type information of the display. According to various embodiments, the device information may include information on an operation mode of the sink device 400, information on a type (e.g., tablet PC, refrigerator, television, etc.) of the sink device 400, manufacturer information, model name information, information of a User Input Back Channel (UIBC) (e.g., version information), and the like. According to various embodiments, the source device 300 may determine whether the sink device 400 is a vertical display based on the obtained device information (e.g., type information of display). For example, in an embodiment, an example of a format of the request message and the response message may be expressed as Table 1 below.

**[Table 1]**

| Request type of source device | Response type of sink device |
|---|---|
| wfd2-video-formats: | wfd2-video-formats: 1920x1080 |
| wfd2_sec_portrait_display: | wfd2_sec_portrait_display: rotation 270 |

For example, the source device 300 may include information for requesting a resolution (e.g., wfd2-video-formats) of the sink device 400 and a display type (e.g., wfd2-sec_portrait_display) of the sink device 400 in a request message and transmit it to the sink device 400. The sink device 400 may include information, to which a resolution (e.g., wfd2-video-formats: 1920x1080) of the sink device 400 and a display type (e.g., an operation mode of the display) of the sink device 400 are added, in a response message and transmit it to the source device 300. According to various embodiments, the display type may be provided as information rotated based on the resolution. For example, since the sink device 400 is in the vertical direction whereas the resolution of the sink device 400 is provided as 1920x1080 based on the horizontal direction, angle information (e.g., rotation 270) rotated based on the horizontal direction may be provided so that the source device 300 may recognize it. According to an embodiment, the sink device 400 may provide resolution information (e.g., 1920x1080) and angle information (e.g., rotation 270) at which the display is rotated in the horizontal direction. The source device 300 may determine whether the display type of the sink device 400 is a vertical direction or a horizontal direction based on the resolution information of the horizontal direction and the rotated angle information. In step S304, when the device information related to the sink device 400 is confirmed, the source device 300 may complete the negotiation procedure with the sink device 400. For example, the source device 300 may transmit a request message to the sink device 400 and receive device information of the sink device 400 from the sink device 400. When the source device 300 obtains the resolution information supported by the sink device 400 and the type information of the display from the received device information, the source device 300 may complete the negotiation procedure.

In step S305, the source device 300 may transmit data (e.g., screen data or play content) to the sink device 400 connected for a miracast service. For example, the source device 300 may check the resolution information that may be supported by the sink device 400, and determine a resolution that may be commonly supported by each device. In addition, the source device 300 may determine whether to rotate an image corresponding to the display type of the sink device 400. According to various embodiments, the source device 300 may convert the image corresponding to the determined resolution and display type, and may transmit the converted image to the sink device 400. According to various embodiments, the source device 300 may transmit data periodically, continuously, or in real time. According to various embodiments, the sink device 400 may receive data (e.g., screen data or image frame data corresponding to a content) transmitted from the source device 300, and display the received data through a display.

In step S306, in a state that a miracast connection is established, the sink device 400 may transmit a control message corresponding to a user input to the source device 300. According to various embodiments, the sink device 400 may transmit a control message according to a user input to the source device 300 through a User Input Back Channel (UIBC). Although not illustrated in FIG. 3, the source device 300 may process a user input to control data, and transmit the controlled data to the sink device 400. According to various embodiments, an input processing operation for a user input will be described in detail with reference to the drawings described below. In addition, the above-described source device corresponds to the same terms as a transmitting device for outputting an image described later, and the sink device corresponds to the same terms as a receiving device for outputting an image described later.

Recently, it has become possible to use a display device while moving room to room instead of using a display device fixed to one space. Accordingly, an optimal connection method between an image transmitting device (e.g., a smartphone, a TV, etc.) and an image receiving device (e.g., a TV) has emerged.

Most of the existing mirroring video transmitting devices were laptops, but recently, mirroring of TVs and smartphones has been increasing overwhelmingly owing to the increase in paid content providers (e.g., Netflix, Disney Plus, etc.).

In this reality, there are various disadvantages when considering the miracast technology that is the basis of mirroring. First, there is a point where the connection is unstable due to signal sensitivity. Second, there is image quality degradation (e.g., mosaic cracking, etc.) caused by connection instability. Third, there are limitations on transmission image quality (e.g., 1080p 30Hz, HD image quality) due to standards at the time of development, and transmission capacity is limited as well.

These disadvantages are caused by the limitation of the transmission capability due to the direct connection between an image transmitting device and an image receiving device. That is, when real-time communication is performed through direct connection between the image transmitting device and the image receiving device, the transmission speed and bandwidth change even with a slight change in reception sensitivity, so it is common to conservatively calculate the transmission amount to increase the stability of the transmission.

In this regard, the present disclosure intends to secure the stability of wireless image transmission beyond the limits of miracast by using a temporary failure compensation method through multiple frame transmission and a long-term failure compensation method through instant cloud generation.

That is, an embodiment of the present disclosure intends to develop a miracast connection method in order to solve the existing screen noise, image quality limitation, and intermediate disconnection problems. To this end, an embodiment of the present disclosure proposes a method of accumulating and transmitting data and a method of restoring a dataset in real time using an instant cloud.

First, it is intended to propose a method of accumulating and transmitting data.

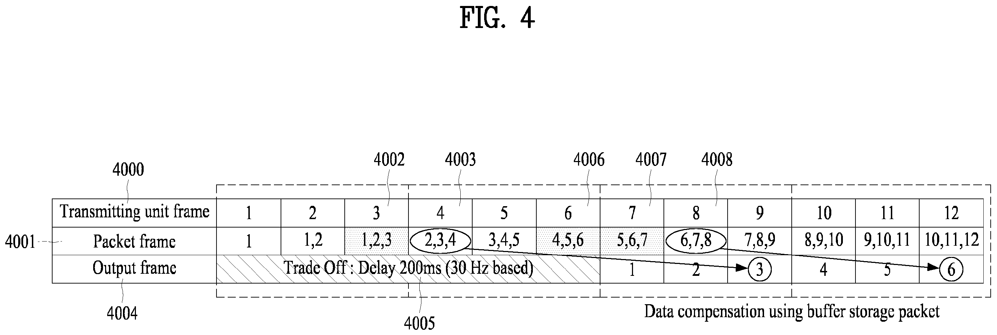

FIG. 4 is a diagram illustrating a method for providing a miracast by accumulating and transmitting data according to an embodiment of the present disclosure. Hereinafter, contents redundant with the above description will be omitted.

General network communication is performed in packet units. That is, when data is transmitted from a transmitting device to a receiving device, a predetermined data set may be packaged as one packet.

Although there are various algorithms exist for the stability of transmitted packets, when packet damage occurs during video transmission, there is no algorithm for recovering the packet damage.

Accordingly, in general, when data outputted from a transmitting unit are transmitted on a network for fast data transmission as it is, a transmitting unit frame 400 may have the data damaged due to interference of intermediate signals. In this case, the receiving device checks whether the data is properly received and makes a request for the data starting with the damaged data to the transmitting device again. Due to this process, a user viewing an image in the receiving device using a miracast (wireless transmission) experiences an effect of a broken screen or a disconnected image. For example, it occurs in various user environments, such as a case in which a location of the transmitting device is changed or a case in which a network signal sensitivity is weak.

To solve this problem, according to an embodiment of the present disclosure, it is intended to propose a method of accumulating and transmitting data.

More specifically, the transmitting unit may divide image data by 2 to 3 frame units. In this case, audio data may also be divided into time equivalent to the divided frame amount. For example, when 60 Hz image is divided by 3 frame units, audio may be divided by 1/20 s. The division is performed in every frame unit, and each frame may have the same information of one to two preceding frames.

Thereafter, a packet may be completed by adding numbering information to the divided frame. That is, referring to a packet frame 4001, a method for accumulating data of the transmitting unit frame 4000 and transmitting it to a receiving device is provided. For example, from a third frame, first and second frames, which are the preceding frames, are packetized together and transmitted to the receiving device. Here, one frame may be randomly designated as 1/10 s, 1/20 s, etc.

That is, the packet frame 4001 is a frame packetized by duplicating data outputted from the transmitting unit frame 4000 in frame unis. For example, a third packet 4002 of the packet frame 4001 may include a first frame, a second frame, and a third frame of the transmitting unit frame 4000. Likewise, a fourth packet 4003 of the packet frame 4001 may include a second frame, a third frame, and a fourth frame of the transmitting unit frame 4000. In this case, the third packet 4002 and the fourth packet 4003 may include the second frame and the third frame in duplicate.

According to this, even if some data is damaged or lost when transmitting a packet from the transmitting device to the receiving device, the receiving device does not have a disconnection effect due to data loss because data can be supplemented through a packet located ahead or behind.

An output frame 4004 for receiving and outputting a frame transmitted through the packet frame 4001 is described as follows.

Accordingly, the receiving device may store three packets (6 to 9 frame information) in a buffer.

The receiving device according to an embodiment of the present disclosure may receive and output data, and in this case, a delay time 4005 called 'trade off exists. For example, when transmitting an image to a TV through mirroring from a smartphone, a minimum delay time (e.g., 200 ms based on 30 Hz) is required because three frames should be packetized and transmitted in one packet. In this case, a frame processing speed is actually 100 ms, but a buffer of 200 ms may be set in consideration of a transmission time and a data recovery time.

Namely, since a capacity of the data transmitted from the transmitting device to the receiving device is tripled, it takes a tripled time, and a delay time of about 6 frames compared to the case of a real-time transmission is generated.

However, in this case, it is merely a delay time of a level that is unrecognizable unless a user simultaneously views the transmitting device and the receiving device. Accordingly, the embodiment of FIG. 4 may notify the user of this point in at least one of the transmitting device and the receiving device as a method for improving image quality and securing reliability. For example, a smartphone may notify a user that an instant reaction such as a touch reaction or a reaction may be delayed in case of using the corresponding miracast providing method.

Hereinafter, when a packet loss actually occurs based on an output frame 4004, a overcoming method according to an embodiment of the present disclosure will be described.

For example, it is assumed that the above-described third packet 4002 is damaged or lost in the process of being transmitted from the transmitting device to the receiving device. In this case, the packet frame 4001 may include the third frame, which is included in the third packet 4002, in the fourth packet 4003 in duplicate and transmit the same to the receiving device. Accordingly, the output frame 4004 may receive and output the third frame from the fourth packet 4003, not the third packet 4002.

It is also applicable to the case of the loss of consecutive packets rather than the loss of a single packet.

For another example, a sixth packet 4006 including the fourth frame, the fifth frame, and the sixth frame and a seventh packet 4007 including the fourth frame, the sixth frame, and the seventh frame may be damaged or lost.

In this case, although the total lost frames correspond to the fourth to seventh frames, since the fourth and fifth frames are included in the previously and normally transmitted fifth packet, there is no problem and the sixth frame and the seventh frame may be received through an eighth packet 4008 to be transmitted later. That is, as described above, since the output frame has a minimum delay time of 200 ms, the output frame is already ready to receive the eighth packet 4008 and output the sixth frame before outputting the sixth frame.

Therefore, according to the packet transmitting method proposed in FIG. 4, real-time buffering is minimized when data is transmitted from the transmitting device to the receiving device, and packet damage failure due to temporary interference may be prevented.

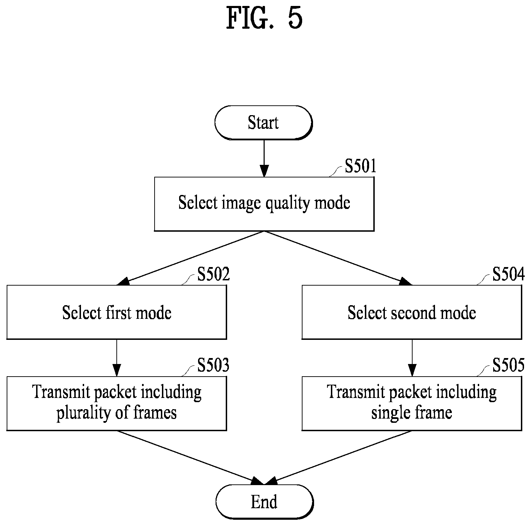

FIG. 5 is a flowchart illustrating a miracast providing method in which data is accumulated and transmitted according to an embodiment of the present disclosure. Hereinafter, descriptions redundant with the above description will be omitted.

As described above, according to the miracast providing method, in which data is accumulated and transmitted, in FIG. 4, a minimum delay time is required because the capacity of the data transmitted from the transmitting device to the receiving device is tripled.

In this case, when a delay time is forced in all cases, it provides an environment not suitable for a user interface. To this end, an embodiment of the present disclosure provides a method for a user to select it.

Referring to FIG. 5, in step S501, a transmitting device or a receiving device may ask a user to select an image quality mode.

In step S502, the user may select a first mode. Here, the first mode is an image quality mode may correspond to a mode for determining image quality to be important when viewing an image such as a movie or the like.

In step S503, when the user selects the first mode, the transmitting device may transmit a packet including a plurality of frames to the receiving device. That is, since the first mode is a mode that considers image quality important, the transmitting device may overcome the image quality limitation of wireless communication by transmitting the packet including a plurality of the frames like the embodiment of FIG. 4.

In step S504, the user may select ae second mode. Here, the second mode is a game mode and may correspond to a mode for determining a manipulation of a game or the like to be important.

In step S505, when the user selects the second mode, the transmitting device may transmit a packet including a single frame to the receiving device. That is, since the second mode is a mode in which manipulation is considered important, the transmitting device may transmit a single frame through a single packet to the receiving device like a general method, such that feedback may be transmitted and received more quickly.

Secondly, it is intended to propose a method of transmitting data by generating an instant cloud server.

When a band itself is infringed by the environment or sensitivity is degraded due to a distance, Miracast communication may also cause a disconnected screen effect similar to Bluetooth communication. In order to compensate for these physical limitations, a method of using a network may be proposed. In this case, when a transmitting device (e.g., a smartphone) transmits data, how to match which information becomes a problem. To overcome this problem, in the present disclosure, numbering information may be recorded when a transmitting device packetizes a packet to transmit a data packet to a receiving device through miracast. Likewise, when the transmitting device transmits a data packet to an instant cloud server through a network, numbering information may be recorded when packetizing a packet. Accordingly, the receiving device and the instant cloud server may receive the packet including the numbering information.

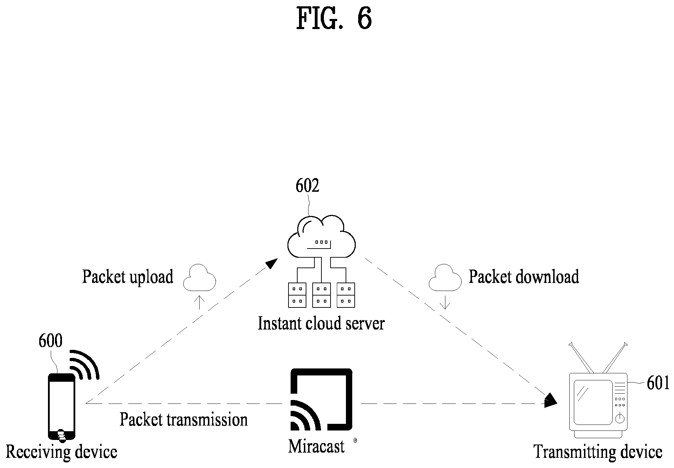

More specifically, it will be described with reference to FIG. 6.

FIG. 6 is a diagram illustrating a miracast providing method for generating an instant cloud according to an embodiment of the present disclosure. Hereinafter, a description redundant with the above description will be omitted.

It is able to generate a URL accessible to an instant cloud server 602 that temporarily connects a transmitting device 600 and a receiving device 601. In this case, the instant cloud server 602 may receive an original image by providing the URL to the transmitting device 600.

The transmitting device 600 may transmit an original screen to the instant cloud server 602. In this case, the transmitting device 600 may transmit a packet constituting image data to the instant cloud server 602.

More specifically, the transmitting device 600 may transmit the original image to the generated URL by recording the same numbering information as a Miracast packet through an application.

In addition, the transmitting device 600 may transmit an image compressed into a packet including a plurality of frames to the receiving device through miracast.

That is, the transmitting device 600 may upload the original image to the URL connected to the instant cloud server 602 and simultaneously transmit the packet of the format described with reference to FIG. 4 to the receiving device. In this case, both the packet uploaded to the instant cloud server 602 and the packet transmitted to the receiving device may include numbering information.

More specifically, when a data packet to be transmitted to the instant cloud server 602 is generated, the transmitting device 600 may record the same numbering information as the miracast. That is, since the packet is divided based on a play time of the original image, a sync may be synchronized based on the numbering information between the instant cloud server 602 and the miracast.

Thereafter, when there is a loss in a miracast signal, missing packet information may be acquired from the instant cloud server 602 to recover the signal.

More specifically, the receiving device 601 may receive a miracast signal packet and check whether there is a damaged packet. In this case, the receiving device 601 may check the number of the damaged packet through the numbering information of the damaged packet. When it is confirmed that the packet is lost or damaged, the receiving device 601 may receive the same packet data of the instant cloud server 602 and output a screen.

In an embodiment, when confirming that the packet has been lost or damaged for a first time (e.g., 1 second) or more, the receiving device 601 may automatically receive packet data from the instant cloud server 602 for a second time (e.g., 10 seconds). Accordingly, stability of screen transmission may be secured.

In other words, when the receiving device 601 receives a packet from the transmitting device 600 through miracast and then confirms that a 300^{th} frame is damaged during a transmission of a screen, the receiving device 601 may receive the 300^{th} frame from the instant cloud server 602 and transmit the screen. That is, a default value for receiving data by the receiving device 601 to transmit a screen is based on miracast, but uses the instant cloud server 602 to ensure a temporary or long-term failure.

On the other hand, as another embodiment, the receiving device 601 may output a screen by receiving a packet from the instant cloud server 602 according to a user selection. In this case, the receiving device 601 may output a pop-up to ask a user whether to output a screen by receiving a packet from the instant cloud server 602.

The instant cloud server 602 may store data of a third time (for example, about 3 seconds). In this case, a required storage capacity per URL is as follows. Data of 3 seconds requires 3 MB for an original screen of FHD 30 Hz, 4 MB for an original screen of FHD 60 Hz, and 8.5 MB for an original screen of 4K 30 Hz. That is, when 1 million transmitting devices connect at the same time, a maximum server capacity of 8.5 TB is required. In other words, the instant cloud server 602 may perform the present embodiment if the server capacity of only about 8.5 TB is provided.

When the connection between the transmitting device 600 and the receiving device 601 is terminated, the capacity of the instant cloud server 602 may be secured by deleting a URL accessible to the generated instant cloud server 602. That is, it may be operated as a cache memory concept of a PC.

In an embodiment, the instant cloud server 602 may operate two types of storage. More specifically, the instant cloud server may operate at least one of a network storage and a local storage.

Here, the network storage may generate a server using a web server and may communicate with the transmitting device and the receiving device. When using the network storage, it is not necessary to depend on the storage capacity of the receiving device, and thus the storage may be operated under any circumstances. However, when using the network storage, since there is a download process from the web server to the receiving device, the speed may be slower than that of the local storage.

In addition, in the case of the local storage, a space of the instant cloud server 602 may be operated using an internal memory of the receiving device. In the case of using the local storage, since a packet received from the transmitting device 600 needs to be stored for only about 3 seconds, there is no need to use a substantially large capacity of memory. In this case, when the local storage is used, a processing speed is very high because there is no download process through the network when data is moved from the server to the receiving device. On the other hand, the storage cannot be operated in a situation where the memory capacity of the receiving device is full. To compensate for these shortcomings, the receiving device 601 may output a pop-up for an unnecessary data organization request to a user when the memory capacity of the storage of the receiving device is full. In addition, the receiving device 601 may terminate a background app or delete the minimum cache data.

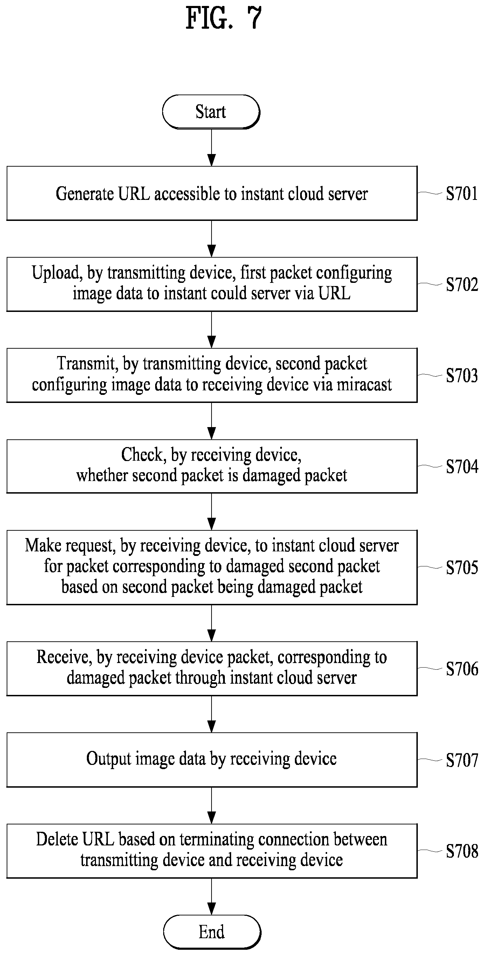

FIG. 7 is a flowchart for explaining a miracast providing method for generating an instant cloud according to an embodiment of the present disclosure. Hereinafter, a description redundant with the above description will be omitted.

In step S701, an instant cloud server may generate a URL accessible to the instant cloud server. Thereafter, the instant cloud server may deliver the URL to a transmitting device.

In step S702, the transmitting device may transmit a first packet constituting image data to the instant cloud server through the URL. In this case, the first packet may include a plurality of frames.

In step S703, the transmitting device may transmit a second packet constituting image data to a receiving device through miracast. In this case, when transmitting a packet from the transmitting device to the receiving device, the transmitting device may transmit a packet including a plurality of frames as described with reference to FIG. 4 and FIG. 5.

The steps S702 and S703 may be performed simultaneously. Also, in this case, the first packet and the second packet are merely for distinguishing names, and frame information included in the packet may be the same or different. More specifically, the transmitting device may record numbering information in the first packet transmitted to the instant cloud server over a network and the second packet transmitted to the receiving device through miracast. Accordingly, the receiving device may then check whether a packet including a prescribed numberth frame has been received.

In step S704, the receiving device may check whether the second packet received through the miracast is a damaged packet. In this case, if the second packet is an undamaged packet, the receiving device may output the image data to a screen using the packet received through the miracast.

If the second packet is a damaged packet, in step S705, the receiving device may make a request for a packet corresponding to the damaged second packet to the instant cloud server. As described above, the second packet may correspond to a packet identical to or different from the first packet. The receiving device may make a request for a packet having numbering information corresponding to the damaged second packet to the instant cloud server based on the numbering information on the received packet.

In step S706, the receiving device may receive a packet corresponding to the damaged packet through the instant cloud server. For example, when confirming that the 400^{th} frame of the n^{th} packet received through the miracast is damaged, the receiving device may receive the m^{th} packet including the 400^{th} frame through the instant cloud server.

In step S707, the receiving device may output image data based on the received packet.

In step S708, when the connection between the transmitting device and the receiving device is terminated, the URL may be deleted. Here, the connection between the transmitting device and the receiving device may be confirmed through whether a miracast connection is established. When the connection between the transmitting device and the receiving device is terminated, the instant cloud server may delete the packet received from the transmitting device after deleting the URL. Accordingly, the instant cloud server may solve the internal capacity problem.

Through this method, stability of network image transmission and reception may be improved. More specifically, with the currently used miracast technology, transmission sensitivity is changed even with a small movement of a transmitting device. It is possible to improve the loss of instantaneous transmission by using a plurality of frame packets, and to prevent long-term transmission failure and sensitivity decrease due to distance by using an instant cloud.

Accordingly, a user may use a transmitting device freely, and fee mobility of a device during transmission is enabled according to performance of the transmitting device. In addition, a screen may be transmitted at a remote location other than the same network. For example, it is possible to play a camera screen of a child's smartphone on a parent's TV at a remote location.

In addition, it is possible to improve a mirroring image quality limited in miracast. In more detail, by overcoming the limitation of a mirroring image currently limited to 1080p and 30 Hz (HD level), it is possible to transmit an image of a more improved image quality. The reason why the image quality is limited in miracast is that a data transmission amount is conservatively calculated in consideration of the instability of a transmission line. If the instability of the transmission line is improved according to the proposal of the present disclosure, a larger capacity of data may be transmitted and received, thereby transmitting an image of 4k 30Hz level.

The present disclosure may be implemented as code that can be written to a computer-readable recording medium and can thus be read by a computer. The computer-readable recording medium may be any type of recording device in which data can be stored in a computer-readable manner. Examples of the computer-readable recording medium include a hard disk drive (HDD), a solid state drive (SSD), a silicon disk drive (SDD), a ROM, a RAM, a CD-ROM, a magnetic tape, a floppy disk, optical data storage, and a carrier wave (e.g., data transmission over the Internet). In addition, the computer may include the controller. The above exemplary embodiments are therefore to be construed in all aspects as illustrative and not restrictive. The scope of the present disclosure should be determined by the appended claims.

### INDUSTRIAL APPLICABILITY

Since a miracast providing method and apparatus according to an embodiment of the present disclosure may be repeatedly implemented, there is industrial applicability.

## Claims

1. A method of providing miracast, the method comprising:
generating (S701) a URL accessible to an instant cloud server (602);
transmitting (S702), by a transmitting device (600), a first packet constituting image data to the instant cloud server (602) through the URL;
transmitting (S703), by the transmitting device (600), a second packet constituting the image data to a receiving device (601) through miracast, while the first packet is transmitted to the instant cloud server (602);
checking (S704), by the receiving device (601), whether the second packet is a damaged packet;
based on the second packet being a damaged packet, making (S705), by the receiving device, a request for a packet corresponding to the damaged second packet to the instant cloud server (602);
receiving (S706), by the receiving device (601), a packet corresponding to the damaged packet through the instant cloud server (602);
outputting (S707), by the receiving device (601), the image data; and
deleting (S708) the URL based on terminating the connection between the transmitting device (600) and the receiving device (601).

2. The method of claim 1, further comprising recording, by the transmitting device (600), numbering information in a packet transmitted to the instant cloud server (602) and a packet transmitted to the receiving device (601).

3. The method of claim 2, wherein the receiving device (601) receives the packet corresponding to the damaged packet through the instant cloud server (602) based on the numbering information.

4. The method of any of claims 1 to 3, further comprising:
based on a packet received for a first time or more being the damaged packet, receiving, by the receiving device (601), the packet corresponding to the damaged packet for a second time through the instant cloud server (602).

5. The method of any of claims 1 to 4, wherein the instant cloud server (602) comprises at least one of a network storage or a local storage.

6. The method of any of claims 1 to 5, wherein the second packet comprises a plurality of frames constituting the image data.

7. The method of any of claims 1 to 6, further comprising:
receiving a transmission scheme switching input from a user; and
receiving, by the receiving device (601), a packet through the instant cloud server (602) based on the transmission scheme switching input.

8. The method of any of claims 1 to 7, further comprising deleting, by the instant cloud server (602), the first packet received from the transmitting device (600) based on terminating the connection between the transmitting device (600) and the receiving device (601).

9. A miracast providing system, comprising:
an instant cloud server (602) generating an accessible URL;
a receiving device receiving and outputting image data; and
a transmitting device (600) configured to transmit a first packet constituting image data to the instant cloud server (602) through the URL and transmit a second packet constituting the image data to the receiving device (601) through miracast, while the first packet is transmitted to the instant cloud server (602),
wherein based on the second packet being a damaged packet, the receiving device (601) makes a request for a packet corresponding to the damaged second packet to the instant cloud server (602) and receives a packet corresponding to the damaged packet through the instant cloud server (602).

10. The miracast providing system of claim 9, wherein the transmitting device (600) records numbering information in a packet transmitted to the instant cloud server (602) and a packet transmitted to the receiving device (601), and
wherein the receiving device (601) receives the packet corresponding to the damaged packet through the instant cloud server (602) based on the numbering information.

11. The miracast providing system of claim 9 or 10, wherein based on a packet received for a first time or more being the damaged packet, the receiving device (601) receives the packet corresponding to the damaged packet for a second time through the instant cloud server (602).

12. The miracast providing system of any of claims 9 to 11, wherein the instant cloud server (602) comprises at least one of a network storage or a local storage.

13. The miracast providing system of any of claims 9 to 12, wherein the second packet comprises a plurality of frames constituting the image data.

14. The miracast providing system of any of claims 9 to 13, wherein the receiving device (601) is configured to receive a transmission scheme switching input from a user and receive a packet through the instant cloud server (602) based on the transmission scheme switching input.

15. The miracast providing system of any of claims 9 to 14, wherein the instant cloud server (602) deletes the URL and the first packet received from the transmitting device (600) based on terminating the connection between the transmitting device (600) and the receiving device (601).

## Patentansprüche

1. Verfahren zur Bereitstellung von Miracast, wobei das Verfahren umfasst:
Erzeugen (S701) einer URL, auf die ein Instant-Cloud-Server (602) zugreifen kann;
Senden (S702), durch ein sendendes Gerät (600), eines ersten Pakets, das Bilddaten enthält, an den Instant-Cloud-Server (602) über die URL;
Senden (S703), durch das sendende Gerät (600), eines zweiten Pakets, das die Bilddaten enthält, an ein empfangendes Gerät (601) über Miracast, während das erste Paket an den Instant-Cloud-Server (602) gesendet wird;
Prüfen (S704), durch das empfangende Gerät (601), ob das zweite Paket ein beschädigtes Paket ist;
auf der Grundlage, dass das zweite Paket ein beschädigtes Paket ist, Erstellen (S705), durch das empfangende Gerät, einer Anfrage für ein dem beschädigten zweiten Paket entsprechendes Paket an den Instant-Cloud-Server (602);
Empfangen (S706), durch das empfangende Gerät (601), eines dem beschädigten Paket entsprechenden Pakets über den Instant-Cloud-Server (602);
Ausgeben (S707), durch das empfangende Gerät (601), der Bilddaten; und
Löschen (S708) der URL auf der Grundlage der Beendigung der Verbindung zwischen dem sendenden Gerät (600) und dem empfangenden Gerät (601).

2. Verfahren nach Anspruch 1, ferner umfassend: Aufzeichnen, durch das sendende Gerät (600), von Nummerierungsinformationen in einem an den Instant-Cloud-Server (602) gesendeten Paket und in einem an das empfangende Gerät (601) gesendeten Paket.

3. Verfahren nach Anspruch 2, wobei das empfangende Gerät (601) das dem beschädigten Paket entsprechende Paket über den Instant-Cloud-Server (602) auf der Grundlage der Nummerierungsinformationen empfängt.

4. Verfahren nach einem der Ansprüche 1 bis 3, ferner umfassend:
auf der Grundlage, dass ein zum ersten Mal oder öfter empfangenes Paket das beschädigte Paket ist, Empfangen, durch das empfangende Gerät (601), des dem beschädigten Paket entsprechenden Pakets ein zweites Mal über den Instant-Cloud-Server (602).

5. Verfahren nach einem der Ansprüche 1 bis 4, wobei der Instant-Cloud-Server (602) mindestens einen Netzwerkspeicher oder einen lokalen Speicher umfasst.

6. Verfahren nach einem der Ansprüche 1 bis 5, wobei das zweite Paket eine Mehrzahl von Frames umfasst, die die Bilddaten bilden.

7. Verfahren nach einem der Ansprüche 1 bis 6, ferner umfassend:
Empfangen einer Eingabe zur Umschaltung des Übertragungsschemas von einem Benutzer; und
Empfangen, durch das empfangende Gerät (601) eines Pakets über den Instant-Cloud-Server (602) auf der Grundlage der Eingabe zur Umschaltung des Übertragungsschemas.

8. Verfahren nach einem der Ansprüche 1 bis 7, ferner umfassend: Löschen, durch den Instant-Cloud-Server (602), des von dem sendenden Gerät (600) empfangenen ersten Pakets auf der Grundlage der Beendigung der Verbindung zwischen dem sendenden Gerät (600) und dem empfangenden Gerät (601).

9. Miracast-Bereitstellungssystem, umfassend:
einen Instant-Cloud-Server (602), der eine zugängliche URL generiert;
ein empfangendes Gerät, das Bilddaten empfängt und ausgibt; und
ein senden des Gerät (600), das dazu eingerichtet ist, ein erstes Paket, das Bilddaten enthält, über die URL an den Instant-Cloud-Server (602) zu senden und ein zweites Paket, das die Bilddaten enthält, über Miracast an das empfangende Gerät (601) zu senden, während das erste Paket an den Instant-Cloud-Server (602) gesendet wird,
wobei das empfangende Gerät (601) auf der Grundlage, dass das zweite Paket ein beschädigtes Paket ist, eine Anfrage für ein dem beschädigten zweiten Paket entsprechendes Paket an den Instant-Cloud-Server (602) stellt und ein dem beschädigten Paket entsprechendes Paket über den Instant-Cloud-Server (602) empfängt.

10. Miracast-Bereitstellungssystem nach Anspruch 9, wobei das sendenden Gerät (600) Nummerierungsinformationen in einem an den Instant-Cloud-Server (602) gesendeten Paket und einem an das empfangende Gerät (601) gesendeten Paket aufzeichnet, und
wobei das empfangende Gerät (601) das dem beschädigten Paket entsprechende Paket über den Instant-Cloud-Server (602) auf der Grundlage der Nummerierungsinformationen empfängt.

11. Miracast-Bereitstellungssystem nach Anspruch 9 oder 10, wobei das empfangende Gerät (601) auf der Grundlage, dass ein zum ersten Mal oder öfter empfangenes Paket das beschädigte Paket ist, das dem beschädigten Paket entsprechende Paket ein zweites Mal über den Instant-Cloud-Server (602) empfängt.

12. Miracast-Bereitstellungssystem nach einem der Ansprüche 9 bis 11, wobei der Instant-Cloud-Server (602) mindestens einen Netzwerkspeicher oder einen lokalen Speicher umfasst.

13. Miracast-Bereitstellungssystem nach einem der Ansprüche 9 bis 12, wobei das zweite Paket eine Mehrzahl von Frames umfasst, die die Bilddaten bilden.

14. Miracast-Bereitstellungssystem nach einem der Ansprüche 9 bis 13, wobei das empfangende Gerät (601) dazu eingerichtet ist, eine Eingabe zur Umschaltung des Übertragungsschemas von einem Benutzer zu empfangen und auf der Grundlage der Eingabe zur Umschaltung des Übertragungsschemas ein Paket über den Instant-Cloud-Server (602) zu empfangen.

15. Miracast-Bereitstellungssystem nach einem der Ansprüche 9 bis 14, wobei der Instant-Cloud-Server (602) die URL und das erste von dem sendenden Gerät (600) empfangene Paket auf der Grundlage der Beendigung der Verbindung zwischen dem sendenden Gerät (600) und dem empfangenden Gerät (601) löscht.

## Revendications

1. Procédé de fourniture de miracast, le procédé comprenant:
la génération (S701) d'une URL qui permet d'accéder à un serveur instantané en nuage (602);
la transmission (S702), à l'aide d'un dispositif de transmission (600), d'un premier paquet contenant des données d'image au serveur instantané en nuage (602) par l'intermédiaire de l'URL;
la transmission (S703), par le dispositif de transmission (600), d'un deuxième paquet contenant les données d'image à un dispositif de réception (601) par l'intermédiaire de miracast, tandis que le premier paquet est transmis au serveur instantané en nuage (602);
la vérification (S704), par le dispositif de réception(601), visant à vérifier si le deuxième paquet est un paquet endommagé;
dans le cas où le deuxième paquet est un paquet endommagé, la formulation (S705), par le dispositif de réception, d'une demande de paquet correspondant au deuxième paquet endommagé, au serveur instantané en nuage (602);
la réception (S706), par le dispositif de réception (601), d'un paquet correspondant au paquet endommagé par l'intermédiaire du serveur instantané en nuage (602);
l'affichage (S707), par le dispositif de réception (601), de données d'image; et
la suppression (S708) de l'URL à la suite de la coupure de la connexion entre le dispositif de transmission (600) et le dispositif de réception (601).

2. Procédé selon la revendication 1, comprenant en outre l'enregistrement, par le dispositif de transmission (600), d'informations de numérotation contenues dans un paquet transmis au serveur instantané en nuage (602) et dans un paquet transmis au dispositif de réception (601).

3. Procédé selon la revendication 2, dans lequel le dispositif de réception (601) reçoit le paquet correspondant au paquet endommagé par l'intermédiaire du serveur instantané en nuage (602) sur la base des informations de numérotation.

4. Procédé selon l'une quelconque des revendications 1 à 3, comprenant en outre:
au cas où un paquet reçu au moins une première fois serait le paquet endommagé, la réception, par le dispositif de réception (601), du paquet correspondant au paquet endommagé une deuxième fois par l'intermédiaire du serveur instantané en nuage (602).

5. Procédé selon l'une quelconque des revendications 1 à 4, dans lequel le serveur instantané en nuage (602) comprend au moins l'un parmi un stockage de réseau ou un stockage local.

6. Procédé selon l'une quelconque des revendications 1 à 5, dans lequel le deuxième paquet comprend plusieurs trames constituant les données d'image.

7. Procédé selon l'une quelconque des revendications 1 à 6, comprenant en outre:
la réception en provenance d'un utilisateur d'une entrée de commutation de schéma de transmission; et
la réception, par le dispositif de réception (601), d'un paquet par l'intermédiaire du serveur instantané en nuage (602) en fonction de l'entrée de commutation de schéma de transmission.

8. Procédé selon l'une quelconque des revendications 1 à 7, comprenant en outre la suppression, par le serveur instantané en nuage (602), du premier paquet reçu en provenance du dispositif de transmission (600), à la suite de la coupure de la connexion entre le dispositif de transmission (600) et le dispositif de réception (601).

9. Système de fourniture de miracast, comprenant:
un serveur instantané en nuage (602) générant une URL accessible;
un dispositif de réception qui reçoit et affiche des données d'image; et
un dispositif de transmission (600) configuré pour transmettre un premier paquet constitué de données d'image au serveur instantané en nuage (602) par l'intermédiaire de l'URL et pour transmettre un deuxième paquet constitué des données d'image au dispositif de réception (601) par l'intermédiaire de miracast, tandis que le premier paquet est transmis au serveur instantané en nuage (602),
dans lequel, au cas où le deuxième paquet serait un paquet endommagé, le dispositif de réception (601) formule une demande au serveur instantané en nuage (602) pour obtenir un paquet correspondant au deuxième paquet endommagé, et reçoit, par l'intermédiaire du serveur instantané en nuage (602), un paquet correspondant au paquet endommagé.

10. Système de fourniture de miracast selon la revendication 9, dans lequel le dispositif de transmission (600) enregistre des informations de numérotation dans un paquet transmis au serveur instantané en nuage (602) et dans un paquet transmis au dispositif de réception (601), et
dans lequel le dispositif de réception (601) reçoit le paquet correspondant au paquet endommagé par l'intermédiaire du serveur instantané en nuage (602) sur la base des informations de numérotation.

11. Système Miracast selon la revendication 9 ou 10, dans lequel, si un paquet reçu au moins une première fois est le paquet endommagé, le dispositif de réception (601) reçoit une deuxième fois le paquet correspondant au paquet endommagé par l'intermédiaire du serveur instantané en nuage (602).

12. Système de diffusion Miracast selon l'une quelconque des revendications 9 à 11, dans lequel le serveur instantané en nuage (602) comprend au moins l'un parmi un stockage de réseau et un stockage local.

13. Système de transmission Miracast selon l'une quelconque des revendications 9 à 12, dans lequel le deuxième paquet comprend une pluralité de trames contenant les données d'image.

14. Système de transmission Miracast selon l'une quelconque des revendications 9 à 13, dans lequel le dispositif de réception (601) est configuré pour recevoir d'un utilisateur une entrée de commutation de schéma de transmission et pour recevoir un paquet par l'intermédiaire du serveur instantané en nuage (602) en fonction de l'entrée de commutation de schéma de transmission.

15. Système de transmission Miracast selon l'une quelconque des revendications 9 à 14, dans lequel le serveur instantané en nuage (602) supprime l'URL et le premier paquet reçu en provenance du dispositif de transmission (600) à la suite de la coupure de la connexion entre le dispositif de transmission (600) et le dispositif de réception (601).
